(19) **Europäisches Patentamt European Patent Office Office européen des brevets**

(11) **EP 3 650 987 B1**

(12) **EUROPEAN PATENT SPECIFICATION**

(45) Date of publication and mention
of the grant of the patent:
**01.11.2023  Bulletin 2023/44**

(21) Application number: **18205131.8**

(22) Date of filing: **08.11.2018**

(51) International Patent Classification (IPC):
*G06F 3/01* (2006.01)     *G01S 15/87* (2006.01)
*G01S 7/524* (2006.01)     *G01S 7/527* (2006.01)
*G01S 15/00* (2020.01)     *G01S 15/66* (2006.01)
*G01S 15/88* (2006.01)

(52) Cooperative Patent Classification (CPC):
**G06F 3/017; G01S 7/524; G01S 7/527;
G01S 15/003; G01S 15/66; G01S 15/876;
G01S 15/88**

(54) **APPARATUS AND METHOD FOR TRACKING MOVEMENT OF AN OBJECT**

VORRICHTUNG UND VERFAHREN ZUR VERFOLGUNG DER BEWEGUNG EINES OBJEKTS

APPAREIL ET PROCÉDÉ DE SUIVI DE MOUVEMENT D'UN OBJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.05.2020  Bulletin 2020/20**

(73) Proprietor: **Vestel Elektronik Sanayi ve Ticaret A.S.
45030 Manisa (TR)**

(72) Inventor: **KÍRÍSKEN, Barbaros
45030 Manisa (TR)**

(74) Representative: **Page White Farrer
Bedford House
21a John Street
London WC1N 2BF (GB)**

(56) References cited:
**WO-A1-2013/140130     GB-A- 2 559 427
US-A1- 2011 242 305**

**Description**

Technical Field

The present disclosure relates to an apparatus and a method for tracking movement of an object.

Background

A number of systems are available or have been proposed by which a device can be controlled using hand gestures or movement of a hand or some other object, such as a "pointer". Some of these systems use cameras or the like to track movement of the object. However, providing cameras and the required image processing functionality represents an additional cost in many cases.

Other systems for detecting hand gestures or movement of a hand or some other object use sound, including for example ultrasound, which is emitted by a loudspeaker or some other transducer and reflected by the object. The reflected sound is detected and processed to track the object. However, in known systems, this often involves measuring time-of-flight or looking for Doppler shifts or phase shifts in the sound reflected by the object. This can require high processing power, which may not be available in relatively inexpensive consumer products. Also, some systems require complex ultrasound signals to be emitted by the loudspeaker, as well as complex processing at the detector side, which again may not be feasible with relatively inexpensive consumer products.

WO2013140130A1 discloses an electronic apparatus that has a transmitter arranged to transmit an acoustic signal and a receiver for receiving acoustic energy comprising a reflection of the acoustic signal from an input object. The apparatus analyses the received signal to determine a user input to the electronic apparatus.

GB2559427A discloses detecting motion relative to a detector by receiving an ultrasonic signal comprising components directly received from a transmitter and reflected from an object, then processing the signal to remove any components constant from one time period to another; movement is then detected based on this movement dependent signal.

US2011242305A1 discloses conducting and controlling multimedia communication. Real-world communication involving sight, sound and body language is supported.

Summary

According to a first aspect disclosed herein, there is provided a method of tracking movement of an object, the method comprising:

receiving, at plural sound detectors, sound which is emitted by one or more sound output devices and reflected from the object, the sound detectors being at different locations relative to each other so as to be spaced apart from each other; characterised by:
each sound detector being arranged to detect a different sound frequency; and
analysing the different sound frequencies respectively received at the plural sound detectors to track movement of the object as the object moves relative to the sound detectors;
wherein the analysing comprises at least one of:

(i) comparing the peak amplitude of the different sound frequencies respectively received at the plural sound detectors as the object moves relative to the sound detectors, and
(ii) comparing the timing of a change in distortion of the different sound frequencies respectively received at the plural sound detectors as the object moves relative to the sound detectors.

Each detector detects a different sound frequency (or a different range of sound frequencies which do not overlap). Different analysis techniques may be applied to discriminate between different types of movement of the object, such as for example a "swipe" or a "tap".

In the case the analysing comprises comparing the peak amplitude of the different sound frequencies, this can be used for example to detect and track a movement towards or away from the sound detectors as a whole, which may be regarded as for example a "tap".

In the case the analysing comprises comparing the timing of a change in distortion of the different sound frequencies, this can be used for example to detect and track a movement generally across the sound detectors, which may be regarded as for example a "swipe".

In an example, each sound detector comprises a band pass filter for passing an output having a frequency corresponding to the sound frequency to be detected by that sound detector.

In an example, the sound detectors are arranged such that said different sound frequencies detected by the sound detectors are ultrasound.

In an example, at least some of the sound detectors are arranged additionally to detect sound in an audible range.

In an example, the sound is emitted by a single sound output device, the sound output device outputting sound having the different sound frequencies.

In an example, the method comprises obtaining a user input based on the tracked movement of the object and providing the user input to a device to be controlled.

According to a second aspect disclosed herein, there is provided apparatus for tracking movement of an object, the apparatus comprising:

one or more sound output devices for emitting sound;
plural sound detectors for receiving sound emitted by the one or more sound output devices and reflected from an object, the sound detectors being at different locations relative to each other so as to be spaced apart from each other; characterised by:

each sound detector being arranged to detect a different sound frequency; and
a processor arranged to analyse the different sound frequencies respectively received at the plural sound detectors to track movement of a said object as said object moves relative to the sound detectors;
wherein the processor is arranged to analyse the different sound frequencies by at least one of:

(i) comparing the peak amplitude of the different sound frequencies respectively received at the plural sound detectors as the object moves relative to the sound detectors, and
(ii) comparing the timing of a change in distortion of the different sound frequencies respectively received at the plural sound detectors as the object moves relative to the sound detectors.

In an example, each sound detector comprises a band pass filter for passing an output having a frequency corresponding to the sound frequency to be detected by that sound detector.

In an example, the sound detectors are arranged such that said different sound frequencies detected by the sound detectors are ultrasound and at least some of the sound detectors are arranged additionally to detect sound in an audible range.

In an example, the apparatus comprises a single sound output device arranged to output sound having the different sound frequencies.

There may also be provided a computer program comprising instructions such that when the computer program is executed on a computing device, the computing device is arranged to carry out a method as described above.

There may be provided a non-transitory computer-readable storage medium storing a computer program as described above.

Brief Description of the Drawings

To assist understanding of the present disclosure and to show how embodiments may be put into effect, reference is made by way of example to the accompanying drawings in which:

Figures 1A and 1B show schematically a side elevation and a plan view of a "smart speaker";

Figure 2 shows schematically emission of sound at plural frequencies;

Figure 3 shows schematically detection of sound at plural frequencies when no object is reflecting sound;

Figure 4 shows schematically the amplitude of the sound received in Figure 3 in the frequency domain;

Figure 5 shows schematically detection of sound at plural frequencies when an object is reflecting sound;

Figure 6 shows schematically the amplitude of the sound received in Figure 5 in the frequency domain; and

Figure 7 shows schematically the level of distortion of sound received at different sound detectors in Figure 5 in the time domain.

Detailed Description

Examples described herein track movement of an object using sound reflected from the object. The sound is detected by sound detectors which are at different locations relative to each other so as to be spaced apart from each other. Each sound detector is arranged to detect a different sound frequency. The different sound frequencies respectively received at the plural sound detectors are analysed to track movement of the object as the object moves relative to the sound detectors.

Each detector detects a different sound frequency (or a different range of sound frequencies which do not overlap). A number of different analysis techniques may be applied to discriminate between different types of movement of the object. The different analysis techniques may be applied as alternatives to each other in different arrangements, depending on for example the specific application, or may all be applied to the different sound frequencies respectively received at the plural sound detectors.

Some examples described herein may be applied to so-called "smart speakers" or "(digital) personal assistants" (herein , often simply referred to generically as a "smart speaker"). Such devices may for example provide for wireless music streaming, local environment sensing (using for example voice and proximity detection) and automatic speech recognition. Such devices typically provide a connection or interface to the World Wide Web. Such devices typically also provide an interface to home automation devices (e.g. providing control for thermostats for domestic heating, control for lighting systems, control for television sets, etc.). Nevertheless, examples described herein have application to other devices, in other fields.

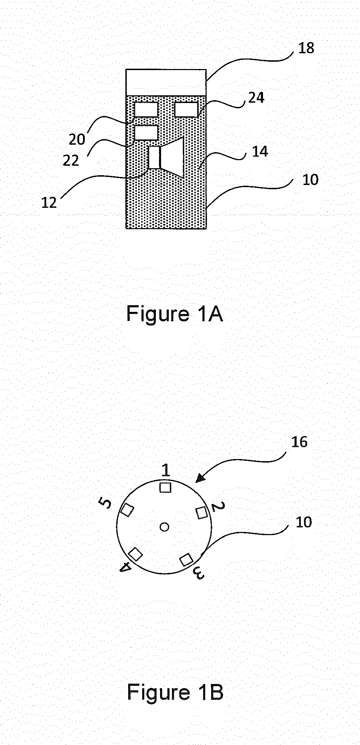

Referring first to Figures 1A and 1B, these show schematically a side elevation and a plan view of an apparatus 10 in which examples described herein may be employed. In this example, the apparatus 10 is a "personal assistant" or "smart speaker" 10.

The apparatus 10 has a sound output device 12, which in this example is a loudspeaker 12. The loudspeaker 12 is indicated as being located behind a grille 14. The loudspeaker 12 may be arranged to emit sound generally omnidirectionally, that is, over an angular range of 360° at least in a horizontal plane and extending generally upwards and downwards of the horizontal plane. In other examples, the loudspeaker 12 may be arranged to emit sound more directionally, i.e. in a smaller angular range in the horizontal plane rather than omnidirectionally.

As will be discussed further below, sound at different frequencies is emitted to be reflected by a moving object. In some examples, the sound is at ultrasonic frequencies, that is, frequencies above the normal human audible range, which may be regarded as frequencies above around 20 kHz. An advantage of this is that it does not interfere with a user's enjoyment of the apparatus. Also, the high frequencies correspond to short wavelengths, which in turn provides for a better resolution of movement of the object being tracked. In any event, the sound at different frequencies may be emitted by a single sound output device 12 or by plural sound output devices 12. Especially in the case that a single sound output device 12 is used, this may be the conventional loudspeaker provided in a smart speaker 10, which is (also) used for outputting "normal" audio, such as music, voice responses from the smart speaker, etc., to be heard by users. Such a loudspeaker may be of the conventional type having a voice coil, cone diaphragm, etc. Alternatively or additionally, the sound output device 12 may be a separate sound emitting component. This may be for example a piezoelectric transducer.

The apparatus 10 further has plural sound detectors 16. In the example shown, there are five sound detectors 16 (numbered 1 to 5 in Figure 1B). The sound detectors 16 are arranged in a circle around the top 18 of the apparatus 10, which provides for 360° coverage in this example. The sound detectors 16 are equiangularly arranged in a circle around the top 18 of the apparatus 10 in this example.

As will be discussed further below, the sound detectors 16 are arranged to detect specific sound frequencies which are reflected by the object being tracked. The sound detectors 16 may be for example microphones which are typically provided in a smart speaker 10. Alternatively or additionally, one or more of the sound detectors 16 may be provided as separate components. These may be for example piezoelectric transducers.

Moreover, in the example shown, the sound output device(s) 12 and the sound detectors 16 are all part of the same device or apparatus 10, here a smart speaker 10. However, the sound output device(s) 12 on the one hand and the sound detectors 16 on the other hand may be provided separately from each other. Indeed, in some examples, the sound output device(s) 12 and one or more of the sound detectors 16 may be provided separately from each other.

The apparatus 10 also has the usual processor 20, data storage 22, working memory 24, etc. commonly provided in computing devices.

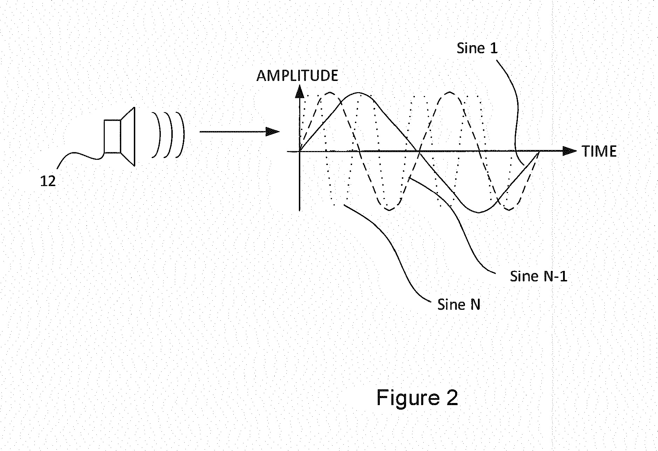

Referring to Figure 2, the sound output device 12 is arranged to output sound at plural different frequencies. The graph in Figure 2 shows amplitude v time for the sound emitted by the sound output device 12. In this example, the sound output device 12 outputs plural sine waves, that is sound at plural distinct single frequencies. It will be appreciated that in practice, many sound output devices add a small amount of "colouration" to sound, such that in practice the emitted sound may not literally be sine waves at single frequencies as there may be small amounts of overtones or spreading of the frequencies. Nevertheless, in an example, the sound output device 12 may be driven under control of signals from the processor 20 which are intended to result in sound being output at plural distinct single frequencies. The plural distinct single frequencies are indicated by Sine 1... Sine N in Figure 2, with Sine 1 having the lowest frequency.

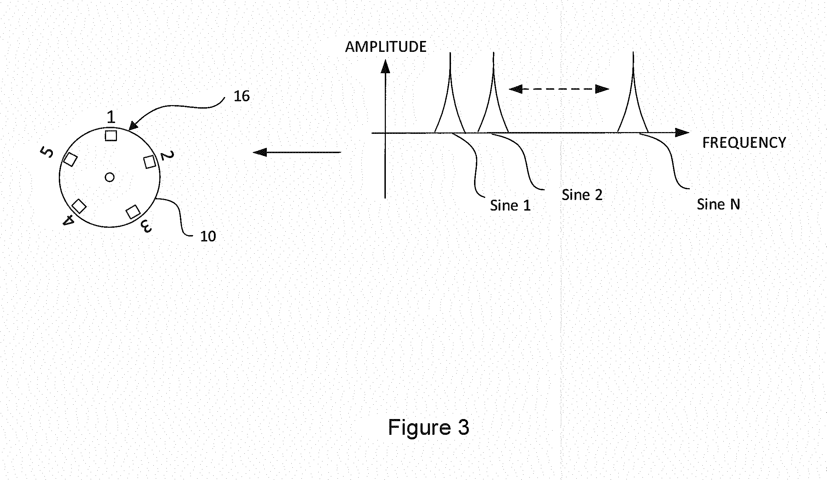

Referring to Figure 3, the plural sound detectors 16 are shown receiving the sound emitted by the sound output device 12 in the absence of an object nearby to reflect sound towards the sound detectors 16. The graph in Figure 3 shows amplitude v frequency for the sound received at the sound detectors 16. Ideally, for sound at a single frequency, the sounds would be represented by sharp, one-dimensional spikes in the frequency domain. However, in practice as mentioned, there will be some colouration of the sound, such that each sound frequency also has tones of low amplitude, leading to a "spreading" in the frequency domain. In addition, the sound that is actually received at the sound detectors may be "coloured" by the environment, again leading to a "spreading" in the frequency domain, as indicated in the graph. Again, Sine 1 is the sound having the lowest frequency.

In an example, each sound detector 16 is arranged to detect a different one of the sound frequencies Sin 1,... Sin N emitted by the sound output device 12. There may be a sound detector 16 for each one of the sound frequencies emitted by the sound output device 12. In this example, there are five sound frequencies emitted by the sound output device 12 and five sound detectors 16 numbered 1 to 5 in the drawings.

In order for a sound detector 16 to be arranged to detect a particular sound frequency, the output of the sound detector 16 may be passed to a band pass filter which only passes an output having a frequency corresponding to the sound frequency to be detected by that sound detector 16. The band pass filters may be implemented using analogue circuitry or digitally. In one example, the or each sound detector 16 may be a digital MEMS (micro-electro-mechanical systems) microphone. In such a case, the or each band pass filter may be a DSP (digital signal processor) filter, which may for example be embedded in a microcontroller or in a codec integrated circuit. In another example, the or each sound detector 16 may be an analogue capacitive or active microphone. In such a case, the or each band pass filter may be an analogue band pass filter and may be located on a printed circuit board. In each case, the band pass filter(s) may be such as to pass ultrasound frequencies.

At least some, and in some examples all, of the sound detectors 16 may also be used to detect sound in audible frequencies, which may generally be in the range 20 Hz to 20 kHz. As such, the sound detectors 16 may also be used to receive voice commands and the like, as is common with "(digital) personal assistants" and "smart speakers" and the like. In such a case, the output of the sound detectors 16 may be split or tapped to pass through a band pass filter to filter only the sound frequency of interest for tracking movement of an object, with the output of the sound detectors 16 also being processed separately for voice commands, etc.

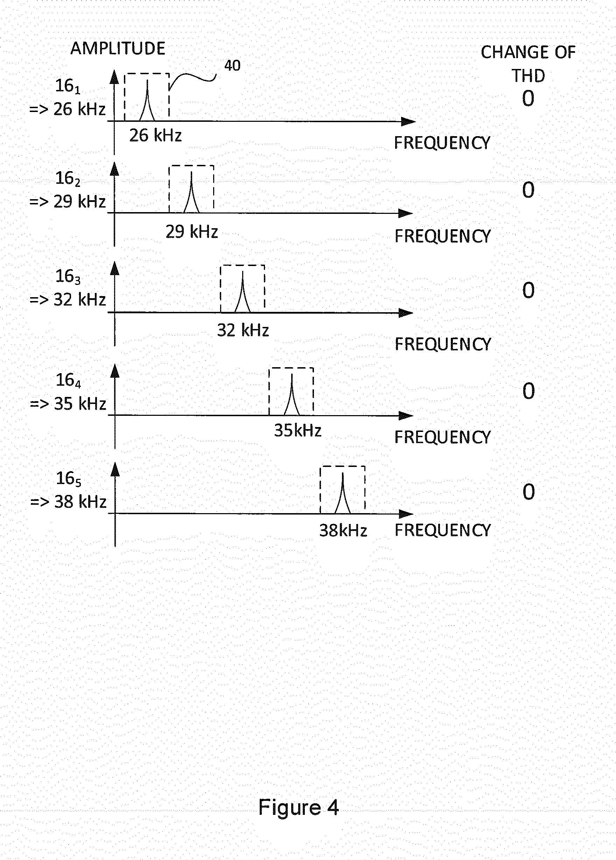

Referring now to Figure 4, this shows schematically the amplitude of the sound received in Figure 3 in the frequency domain for the different sound detectors $16_1$ ... 16s. In this illustrative example, the sound output device 12 is arranged to output five different sound frequencies corresponding to the five sound detectors 16. The sound frequencies in this example are 26 kHz, 29 kHz, 32 kHz, 35 kHz and 38 kHz. In other examples, different frequencies and different spacings between the frequencies may be used. Correspondingly, the different sound detectors $16_1$ ... $16_5$ are arranged to detect a range of frequencies respectively centred on the different frequencies output by the sound output device 12. This is indicated by windows 40 around the peaks of the different sound frequencies in Figure 4. In this example, the windows 40 extend $\pm 1$ kHz around the centre frequencies (i.e. from 25 to 27 kHz for the first sound frequency of 26 kHz, etc.). As can be seen, the sound received at each of the sound detectors 16 has substantially the same form. Moreover, the sound received at each of the sound detectors 16 is free of distortion, or subject to the same distortion due to environmental reflections, as indicated by a zero under "CHANGE OF THD" in Figure 4, where THD is total harmonic distortion.

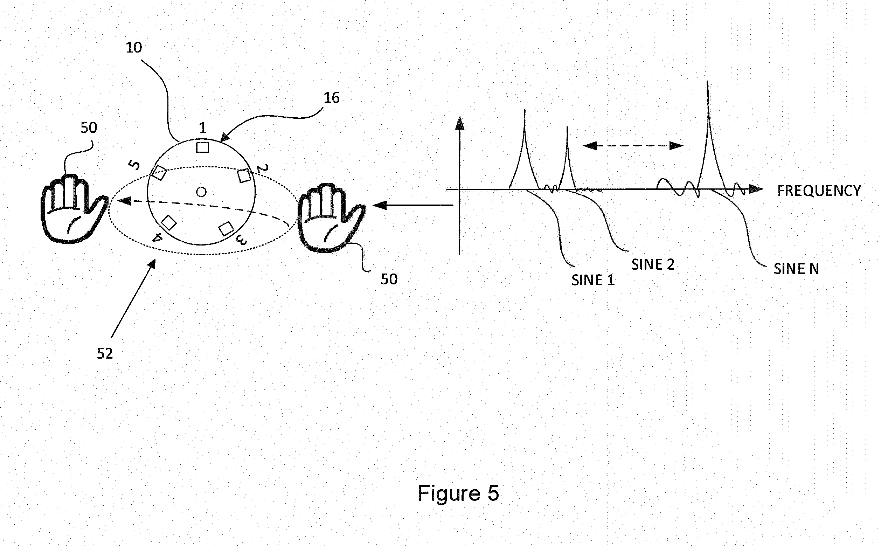

Referring to Figure 5, the plural sound detectors 16 are shown receiving the sound emitted by the sound output device 12 in the presence of an object nearby which is reflecting sound towards the sound detectors 16. The object 50 in this case is a user's hand, but may be another object, such as a pointer or the like. The hand 50 is shown moving from right to left over the top 18 of the apparatus 10. The hand 50 is mainly moving over the lower part of the top face 18 of the apparatus 10 in the drawing, which means that sound is mainly being reflected towards the lower sound detectors $16_2$ to $16_5$ in the drawing and little sound gets reflected towards the upper sound detector $16_1$ in the drawing. The area 52 generally affected by reflections from the hand or other object 50 is indicated.

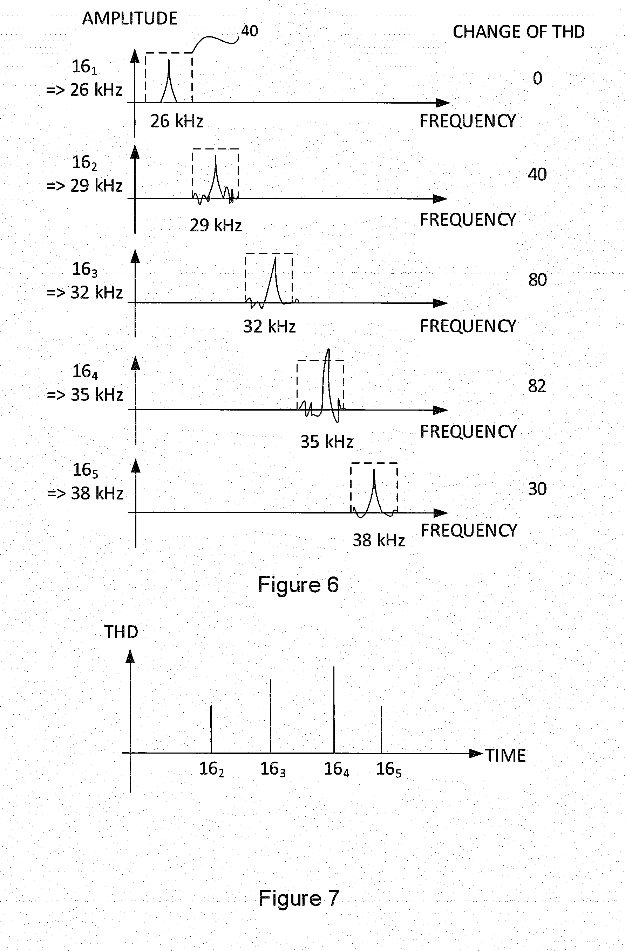

As can be seen in Figure 5 and also in Figure 6, which shows schematically the amplitude of the sound received in Figure 5 in the frequency domain for the different sound detectors $16_1$ ... $16_5$, some of the received sound frequencies are subject to distortion. In particular, in this example, the sound detected at the first sound detector $16_1$ is not subject to distortion, or least to any appreciable distortion, as the moving object is not reflecting any substantial amount of sound towards that first sound detector $16_1$. However, the sound detected at each of the other sound detectors $16_2$ to $16_5$ is subject to distortion because sound is being reflected towards those other sound detectors $16_2$ to $16_5$ by the moving object 50. This is shown by the additional tones, which have a low amplitude, being added around the respective centre frequencies for those other frequencies.

By injecting sound having different frequencies and having plural sound detectors 16 spaced from each other and each of which can detect sound having one of the injected different frequencies, movement of an object 50 which is reflecting the sound can be tracked by appropriate analysis of the sound detected at the plural sound detectors 16. A number of options for analysing the sound detected at the plural sound detectors 16 are possible, as will be discussed. In some examples, for example for a simple application where only simple movement of the object 50 needs to be tracked, only one of these options for analysis may be employed. In other, more sophisticated examples, where a number of different and possibly complex movements of the object 50 are to be tracked, a number of options for analysis may be employed, whether simultaneously or sequentially. The analysis may be carried out by the processor 20 of the apparatus 10 or by some other processor of some other device or apparatus which receives output signals from the sound detectors 16.

In one example, the amplitude of the signals received at the plural sound detectors 16 may be monitored. If it is observed that the amplitude of the signals received at each of the plural sound detectors 16 increases, and in particular increases by a similar amount, then it can be taken that the object 50 has moved closer to the sound detectors 16 as a whole. This is because more of the sound emitted by the sound output device 12 is being reflected directly towards the sound detectors 16. Conversely, if it is observed that the amplitude of the signals received at each of the plural sound detectors 16 decreases, and in particular decreases by a similar amount, then it can be taken that the object 50 has moved away from the sound detectors 16 as a whole. This movement of the object 50 towards or away from the sound detectors 16 as a whole can be interpreted as a specific gesture or command. For example, this movement may be interpreted as a "tap" command (even though the object may not literally have touched the apparatus 10). This can then be provided as some input to a device that is to be controlled by the movement of the object 50.

In another example, the levels of distortion of the sound detected at the sound detectors 16 and/or the relative timing of distortion of the sound detected at the sound detectors 16 may be analysed. In an example of this, the signals output by the sound detectors 16, which correspond to the sound received at the sound detectors 16, may be converted to the frequency domain. A fast Fourier transform (FFT) may be used for this, for example. The signals can then be analysed in the frequency domain. As can be seen in Figures 5 and 6 and as discussed above, in the presence of an object 50 reflecting the emitted sound towards the sound detectors 16, the sound received at at least some of the sound detectors 16 is subject to distortion in that additional frequencies are added. It may be noted that the distortion gives the signals in the frequency domain the appearance of a sinc-like function, where sine is the function $sinc(x) = sin(x)/x$ or $sinc(x) = sin(\pi x)/\pi x$.

This distortion in the detected signals may be measured or quantified. In an example, this may be carried out by converting the time domain signal to the frequency domain, using for example a fast Fourier transform (FFT). The frequency domain signal is then optionally sampled or down-sampled by a specific scale factor. The remaining discrete values are then averaged over the size of the band pass window to find the total harmonic distortion. The average value may be scaled if the frequency domain signal was sampled or down-sampled. A zero or low value means low distortion.

Mathematically, an example may be represented as follows:

$$F_{micN}(f) = FFT(F_{micN}(t)) \qquad (1)$$

$$THD_N = (\sum_{x=BP_{start}}^{x=BP_{end}} F_{micN}[x]) \cdot 1/(size\ of\ (x)) \qquad (2)$$

$$F_{micN}[F] = F_{micN}(f) \cdot \delta(F-kT) \qquad (3)$$

$$THD_N = ((\sum_{x=BP_{start}}^{x=BP_{end}} F_{micN}[x]) \cdot 1/(size\ of\ (x))) \cdot scaling\ factor \qquad (4)$$

$$max_N = max(F_{micN}[F]) \qquad (5)$$

Here, (1) represents converting the time domain signal to the frequency domain; (2) represents averaging over the size of the band pass window to find the total harmonic distortion; (3) represents down-sampling of the signal; (4) represents averaging over the size of the band pass window to find the total harmonic distortion in the case the signal was down-sampled; and (5) represents finding the maximum of the (down-sampled) signals from all microphones.

An example of results for this is indicated under "CHANGE OF THD" in Figure 6, where THD is total harmonic distortion. As noted above, in this example, the sound detected at the first sound detector 161 is not subject to distortion (indicated by a zero), or least to any appreciable distortion, as the moving object is not reflecting any substantial amount of sound towards that first sound detector $16_1$. On the other hand, the sound detected at each of the other sound detectors $16_2$ to $16_5$ is subject to distortion in this example, with the distortion being greater for sound detectors $16_3$ and $16_4$ and

less for sound detectors $16_2$ and $16_5$.

In some examples, it may be possible to compare the relative levels of distortion at each of the sound detectors 16 to determine where the object 50 is located relative to the sound detectors 16 at any particular point in time. For example, a higher level of distortion at any particular sound detector 16 may be interpreted as implying that the object 50 is close to that particular sound detector 16. Whether this is practical may depend in part on the accuracy of the sound detectors 16 and signal processing involved. It may also depend on the environment in which the apparatus 10 is being used. If for example the environment is such as to reflect sound to a large degree anyway, this may mean that it is less reliable to use the relative levels of distortion. Whereas if the environment tends to absorb sound rather than reflect sound, this may be used reliably.

In other examples, the time that distortion occurred to the sound at each of the sound detectors 16 may be used to obtain an indication of the movement of the object 50 relative to the different sound detectors 16. Referring to Figure 7, this shows schematically the level of distortion of the sound received at the different sound detectors 16 in Figure 5 in the time domain. As can be seen, there, again, no distortion to the sound at the first sound detector $16_1$. Distortion first occurs in sound received at the second sound detector $16_2$, with distortion then occurring in sequence, in this example, to the third to fifth sound detectors $16_3$, $16_4$, $16_5$. This can be interpreted as the object 50 moving over the second to fifth sound detectors $16_2$ - $16_5$ in sequence (as in the example of Figure 5, discussed above). Other timing sequences can be interpreted correspondingly as different movements of the object 50 relative to the individual sound detectors 16.

It may be noted that at least two sound detectors 16 are normally required in order to be able to detect movement of the object 50, such as a hand, relative to the sound detectors 16 or the apparatus 120 as a whole. For example, two sound detectors 16 may be sufficient to detect a simple "swipe" in a 2-dimensional plane. However, having at least three sound detectors 16 in general allows for more sophisticated or complex movements of the object 50 to be detected and tracked, and/or to result in more accurate tracking of movements of the object 50 with fewer errors.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (e.g. a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

**Claims**

1. A method of tracking movement of an object (50), the method comprising:
   receiving, at plural sound detectors (16), sound which is emitted by one or more sound output devices (12) and reflected from the object (50), the sound detectors (16) being at different locations relative to each other so as to be spaced apart from each other; **characterised by**:

each sound detector (16) being arranged to detect a different sound frequency; and
analysing the different sound frequencies respectively received at the plural sound detectors (16) to track movement of the object (50) as the object (50) moves relative to the sound detectors (16);
wherein the analysing comprises at least one of:

> (i) comparing the peak amplitude of the different sound frequencies respectively received at the plural sound detectors (16) as the object (50) moves relative to the sound detectors (16), and
> (ii) comparing the timing of a change in distortion of the different sound frequencies respectively received at the plural sound detectors (16) as the object (50) moves relative to the sound detectors (16).

2. A method according to claim 1, wherein each sound detector (16) comprises a band pass filter for passing an output having a frequency corresponding to the sound frequency to be detected by that sound detector (16).

3. A method according to claim 1 or claim 2, wherein the sound detectors (16) are arranged such that said different sound frequencies detected by the sound detectors (16) are ultrasound.

4. A method according to claim 3, wherein at least some of the sound detectors (16) are arranged additionally to detect sound in an audible range.

5. A method according to any of claims 1 to 4, wherein the sound is emitted by a single sound output device (12), the sound output device (12) outputting sound having the different sound frequencies.

6. A method according to any of claims 1 to 5, comprising obtaining a user input based on the tracked movement of the object (50) and providing the user input to a device to be controlled.

7. Apparatus (10) for tracking movement of an object (50), the apparatus (10) comprising:

> one or more sound output devices (12) for emitting sound;
> plural sound detectors (16) for receiving sound emitted by the one or more sound output devices (12) and reflected from an object (50), the sound detectors (16) being at different locations relative to each other so as to be spaced apart from each other; **characterised by**:

> > each sound detector (16) being arranged to detect a different sound frequency; and
> > a processor (20) arranged to analyse the different sound frequencies respectively received at the plural sound detectors (16) to track movement of a said object (50) as said object (50) moves relative to the sound detectors (16);
> > wherein the processor (20) is arranged to analyse the different sound frequencies by at least one of:

> > > (i) comparing the peak amplitude of the different sound frequencies respectively received at the plural sound detectors (16) as the object (50) moves relative to the sound detectors (16), and
> > > (ii) comparing the timing of a change in distortion of the different sound frequencies respectively received at the plural sound detectors (16) as the object (50) moves relative to the sound detectors (16).

8. Apparatus (10) according to claim 7, wherein each sound detector (16) comprises a band pass filter for passing an output having a frequency corresponding to the sound frequency to be detected by that sound detector (16).

9. Apparatus (10) according to claim 7 or claim 8, wherein the sound detectors (16) are arranged such that said different sound frequencies detected by the sound detectors (16) are ultrasound and at least some of the sound detectors (16) are arranged additionally to detect sound in an audible range.

10. Apparatus (10) according to any of claims 7 to 9, comprising a single sound output device (12) arranged to output sound having the different sound frequencies.

11. A computer program comprising instructions such that when the computer program is executed on the processor (20) of the apparatus (10) of claim 7, apparatus is arranged to carry out a method according to any of claims 1 to 6.

**Patentansprüche**

1. Verfahren zum Verfolgen der Bewegung eines Objekts (50), wobei das Verfahren aufweist:

   Empfangen von Schall, der von ein oder mehr Schallausgabevorrichtungen (12) ausgesendet und von dem Objekt (50) reflektiert wird, an mehreren Schalldetektoren (16), wobei sich die Schalldetektoren (16) an verschiedenen Stellen relativ zueinander befinden, um voneinander beabstandet zu sein;
   **gekennzeichnet durch**:

   eingerichtet sein jedes Schalldetektors (16), um eine verschiedene Schallfrequenz zu erfassen; und
   Analysieren der verschiedenen Schallfrequenzen, die jeweils an den mehreren Schalldetektoren (16) empfangen werden, um die Bewegung des Objekts (50) zu verfolgen, wenn sich das Objekt (50) relativ zu den Schalldetektoren (16) bewegt;
   wobei das Analysieren wenigstens eines aufweist von:

   (i) Vergleichen der Spitzenamplitude der verschiedenen Schallfrequenzen, die jeweils an den mehreren Schalldetektoren (16) empfangenen werden, wenn sich das Objekt (50) relativ zu den Schalldetektoren (16) bewegt, und
   (ii) Vergleichen des Zeitpunkts einer Änderung der Verzerrung der verschiedenen Schallfrequenzen, die jeweils an den mehreren Schalldetektoren (16) empfangen werden, wenn sich das Objekt (50) relativ zu den Schalldetektoren (16) bewegt.

2. Verfahren nach Anspruch 1, wobei jeder Schalldetektor (16) einen Bandpassfilter zum Durchlassen eines Ausgangs mit einer Frequenz entsprechend der von diesem Schalldetektor (16) zu erfassenden Schallfrequenz aufweist.

3. Verfahren nach Anspruch 1 oder Anspruch 2, wobei die Schalldetektoren (16) so eingerichtet sind, dass die von den Schalldetektoren (16) erfassten verschiedenen Schallfrequenzen Ultraschall sind.

4. Verfahren nach Anspruch 3, wobei wenigstens einige der Schalldetektoren (16) zusätzlich eingerichtet sind, um Schall in einem hörbaren Bereich zu erfassen.

5. Verfahren nach einem der Ansprüche 1 bis 4, wobei der Schall von einer einzigen Schallausgabevorrichtung (12) ausgesendet wird, wobei die Schallausgabevorrichtung (12) Schall mit den verschiedenen Schallfrequenzen ausgibt.

6. Verfahren nach einem der Ansprüche 1 bis 5, aufweisend ein Erhalten einer Benutzereingabe basierend auf der verfolgten Bewegung des Objekts (50) und ein Bereitstellen der Benutzereingabe an einem zu steuernden Gerät.

7. Vorrichtung (10) zum Verfolgen der Bewegung eines Objekts (50), wobei die Vorrichtung (10) aufweist:

   ein oder mehr Schallausgabevorrichtungen (12) zum Aussenden von Schall;
   mehrere Schalldetektoren (16) zum Empfangen von Schall, der von den ein oder mehr Schallausgabevorrichtungen (12) ausgesendet und von einem Objekt (50) reflektiert wird, wobei sich die Schalldetektoren (16) an verschiedenen Stellen relativ zueinander befinden, um voneinander beabstandet zu sein; **gekennzeichnet durch**:

   eingerichtet sein jedes Schalldetektors (16), um eine verschiedene Schallfrequenz zu erfassen; und
   einen Prozessor (20), der eingerichtet ist, um die verschiedenen Schallfrequenzen zu analysieren, die jeweils an den mehreren Schalldetektoren (16) empfangen werden, um die Bewegung eines Objekts (50) zu verfolgen, wenn sich das Objekt (50) relativ zu den Schalldetektoren (16) bewegt;
   wobei der Prozessor (20) eingerichtet ist, um die verschiedenen Schallfrequenzen durch wenigstens eines zu analysieren von:

   (i) Vergleichen der Spitzenamplitude der verschiedenen Schallfrequenzen, die jeweils an den mehreren Schalldetektoren (16) empfangenen werden, wenn sich das Objekt (50) relativ zu den Schalldetektoren (16) bewegt, und
   (ii) Vergleichen des Zeitpunkts einer Änderung der Verzerrung der verschiedenen Schallfrequenzen, die jeweils an den mehreren Schalldetektoren (16) empfangen werden, wenn sich das Objekt (50) relativ zu den Schalldetektoren (16) bewegt.

**8.** Vorrichtung (10) nach Anspruch 7, wobei jeder Schalldetektor (16) einen Bandpassfilter zum Durchlassen eines Ausgangs mit einer Frequenz entsprechend der von diesem Schalldetektor (16) zu erfassenden Schallfrequenz aufweist.

**9.** Vorrichtung (10) nach Anspruch 7 oder 8, wobei die Schalldetektoren (16) so eingerichtet sind, dass die von den Schalldetektoren (16) erfassten verschiedenen Schallfrequenzen Ultraschall sind, und wenigstens einige der Schalldetektoren (16) zusätzlich eingerichtet sind, um Schall in einem hörbaren Bereich zu erfassen.

**10.** Vorrichtung (10) nach einem der Ansprüche 7 bis 9, aufweisend eine einzige Schallausgabevorrichtung (12), die eingerichtet ist, um Schall mit den verschiedenen Schallfrequenzen auszugeben.

**11.** Computerprogramm, aufweisend Anweisungen derart, dass, wenn das Computerprogramm auf dem Prozessor (20) der Vorrichtung (10) nach Anspruch 7 ausgeführt wird, die Vorrichtung eingerichtet ist, um ein Verfahren nach einem der Ansprüche 1 bis 6 auszuführen.

**Revendications**

**1.** Procédé de suivi de mouvement d'un objet (50), le procédé consistant à :

recevoir, au niveau de plusieurs détecteurs de son (16), du son qui est émis par un ou plusieurs dispositifs de sortie de son (12) et réfléchi par l'objet (50), les détecteurs de son (16) étant situés à différents emplacements les uns par rapport aux autres de manière à être espacés les uns des autres,
**caractérisé par** :

chaque détecteur de son (16) étant agencé pour détecter une fréquence de son différente; et
une étape d'analyse des différentes fréquences de son respectivement reçues au niveau des plusieurs détecteurs de son (16) pour suivre un mouvement de l'objet (50) lorsque l'objet (50) se déplace par rapport aux détecteurs de son (16),
dans lequel l'analyse comprend au moins l'une de ces étapes de :

(i) comparaison de l'amplitude crête des différentes fréquences de son respectivement reçues au niveau des plusieurs détecteurs de son (16) lorsque l'objet (50) se déplace par rapport aux détecteurs de son (16) ; et
(ii) comparaison du moment d'un changement de distorsion des différentes fréquences de son respectivement reçues au niveau des plusieurs détecteurs de son (16) lorsque l'objet (50) se déplace par rapport aux détecteurs de son (16).

**2.** Procédé selon la revendication 1, dans lequel chaque détecteur de son (16) comprend un filtre passe-bande servant à laisser passer une sortie ayant une fréquence correspondant à la fréquence de son devant être détectée par ce détecteur de son (16).

**3.** Procédé selon la revendication 1 ou 2, dans lequel les détecteurs de son (16) sont agencés de telle sorte que lesdites différentes fréquences de son détectées par les détecteurs de son (16) sont des ultrasons.

**4.** Procédé selon la revendication 3, dans lequel au moins certains des détecteurs de son (16) sont agencés pour, en plus, détecter un son dans une plage audible.

**5.** Procédé selon l'une quelconque des revendications 1 à 4, dans lequel le son est émis par un seul dispositif de sortie de son (12), le dispositif de sortie de son (12) émettant un son ayant les différentes fréquences de son.

**6.** Procédé selon l'une quelconque des revendications 1 à 5, consistant à obtenir une entrée d'utilisateur sur la base du mouvement suivi de l'objet (50) et à fournir l'entrée d'utilisateur à un dispositif à contrôler.

**7.** Appareil (10) servant à suivre un mouvement d'un objet (50), l'appareil (10) comprenant
un ou plusieurs dispositifs de sortie de son (12) servant à émettre du son :

plusieurs détecteurs de son (16) servant à recevoir du son émis par lesdits un ou plusieurs dispositifs de sortie de son (12) et réfléchi par un objet (50), les détecteurs de son (16) étant situés à différents emplacements les uns par rapport aux autres de manière à être espacés les uns des autres, **caractérisé par** :

chaque détecteur de son (16) étant agencé pour détecter une fréquence de son différente ; et un processeur (20) étant agencé pour analyser les différentes fréquences de son respectivement reçues au niveau des plusieurs détecteurs de son (16) pour suivre un mouvement dudit objet (50) lorsque ledit objet (50) se déplace par rapport aux détecteurs de son (16), dans lequel le processeur (20) est agencé pour analyser les différentes fréquences de son en effectuant au moins l'une de ces étapes de :

(i) comparaison de l'amplitude crête des différentes fréquences de son respectivement reçues au niveau des plusieurs détecteurs de son (16) lorsque l'objet (50) se déplace par rapport aux détecteurs de son (16) ; et
(ii) comparaison du moment d'un changement de distorsion des différentes fréquences de son respectivement reçues au niveau des plusieurs détecteurs de son (16) lorsque l'objet (50) se déplace par rapport aux détecteurs de son (16).

8. Appareil (10) selon la revendication 7, dans lequel chaque détecteur de son (16) comprend un filtre passe-bande servant à laisser passer une sortie ayant une fréquence correspondant à la fréquence de son devant être détectée par ce détecteur de son (16).

9. Appareil (10) selon la revendication 7 ou 8, dans lequel les détecteurs de son (16) sont agencés de telle sorte que lesdites différentes fréquences de son détectées par les détecteurs de son (16) sont des ultrasons, et dans lequel au moins certains des détecteurs de son (16) sont agencés pour, en plus, détecter un son dans une plage audible.

10. Appareil (10) selon l'une quelconque des revendications 7 à 9, comprenant un seul dispositif de sortie de son (12) agencé pour émettre un son ayant les différentes fréquences de son.

11. Programme informatique comprenant des instructions de telle sorte que, lorsque le programme informatique est exécuté sur le processeur (20) de l'appareil (10) de la revendication 7, l'appareil est agencé pour effectuer un procédé selon l'une quelconque des revendications 1 à 6.

Figure 1A

Figure 1B

Figure 2

Figure 3

14

AMPLITUDE                                        CHANGE OF
                                                    THD

$16_1$
=> 26 kHz                                              0

              26 kHz                        FREQUENCY

$16_2$
=> 29 kHz                                              0

              29 kHz                        FREQUENCY

$16_3$
=> 32 kHz                                              0

              32 kHz
                                            FREQUENCY

$16_4$
=> 35 kHz                                              0

              35kHz
                                            FREQUENCY

$16_5$
=> 38 kHz                                              0

              38kHz      FREQUENCY

Figure 4

Figure 5

Figure 6

Figure 7

**EP 3 650 987 B1**

**REFERENCES CITED IN THE DESCRIPTION**

**Patent documents cited in the description**

- WO 2013140130 A1
- GB 2559427 A
- US 2011242305 A1